(19) Europäisches Patentamt
European Patent Office
Office européen des brevets

(11) Publication number: **0 306 115 B1**

(12) **EUROPEAN PATENT SPECIFICATION**

(45) Date of publication of patent specification: **22.12.93**

(51) Int. Cl.[5]: **C08L 73/00**, B65D 1/34

(21) Application number: **88201904.5**

(22) Date of filing: **02.09.88**

(54) **Polymer-based container.**

(30) Priority: **04.09.87 US 94978**
**04.09.87 US 94954**
**13.10.87 US 107215**
**13.10.87 US 107216**

(43) Date of publication of application:
**08.03.89 Bulletin 89/10**

(45) Publication of the grant of the patent:
**22.12.93 Bulletin 93/51**

(84) Designated Contracting States:
**BE DE ES FR GB GR IT NL**

(56) References cited:
**EP-A- 0 181 014**
**FR-A- 2 038 807**
**GB-A- 1 128 793**

(73) Proprietor: **SHELL INTERNATIONALE RESEARCH MAATSCHAPPIJ B.V.**
**Carel van Bylandtlaan 30**
**NL-2596 HR Den Haag(NL)**

(72) Inventor: **Korcz, William Harold**
**11201 Olympia Drive, Apt. 2708**
**Houston Texas 77042(US)**
Inventor: **Kastelic, John Robert**
**20235 Kings Camp**
**Katy Texas 77450(US)**
Inventor: **Dangayach, Kailash Chandra Banwarilal**
**134217 Dripping Springs Drive**
**Houston Texas 77083(US)**
Inventor: **Armer, Thomas Alex**
**570 Prospect Street, No. 6**
**New Haven Connecticut 06511(US)**

**EP 0 306 115 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to a polymer-based container which may be used for heating or cooking of food in hot air, convection, household and microwave ovens, as well as in retort sterilization or hot filling processes. More particularly, this invention relates to a monolayer, shelf stable, dimensionally heat stable, deep-drawn, thermoformed container which is made of a polyketone polymer.

With the advent of the use of microwave ovens in addition to conventional ovens, has come the need for packages which can be used in both and which possess many other characteristics as well. The metallic packages used for "TV dinners" in years past are not satisfactory as polyfunctional packages, since the metallic packages are opaque to microwave radiation and result in uneven distribution of heat to the food and may even result in damage to the microwave oven. Thus, metallic trays have been replaced by polymeric trays for use in all types of ovens. Packages or trays are also known which are made of a material transparent to microwave energy. It has been proposed too to use a plastic material for the package to accomplish even heat distribution to the food within a single compartment or tray in a microwave oven.

The following properties are desired properties of a plastic as a high performance food or beverage deep-drawn packaging material:

(1) Tensile properties - High modulus of elasticity, good temperature resistance, and high degree of orientation due to drawing at temperatures below $T_m$.

(2) Water Vapour Transmission Rate (WVTR) - The plastic should have a low enough WVTR so as to not be excessively permeable to water vapour, such as nylon and other high performance thermoplastic materials in water sensitivity.

(3) Impact Strength/Stiffness Balance - The impact strength of a plastic should be superior to most of the high performance plastic packaging materials. The package needs to be able to withstand the handling and dropping of packages during manufacture, shipping and storage.

(4) Monolayer - The plastic material should be suitable as a monolayer, without the need for a multilayer structure which perhaps includes a barrier layer, adhesive layer or regrind layer.

(5) Retortability - The plastic object should be able to withstand exposure to water vapour of 135 °C for 30 minutes without any significant buckling, wrinkling or distortion.

(6) Hot Fillable - The plastic object should be able to withstand being filled with hot (100 °C) food or beverages, sealed, and cooled without significant buckling, wrinkling or distortion, even after cooling.

(7) Draw Ratio - The plastic should draw to a ratio of at least 2:1 in a length/width direction.

(8) Cycle Time - Cycle time for forming the plastic into the article should be short.

(9) Additional Forming Steps - Additional forming steps, such as a heat treatment, are not desired.

Food and beverage cans and packages which are dimensionally heat stable, retortable under standard retort conditions at 135 °C and hot fillable at 100 °C are known. An example of this is polycarbonate, which is dimensionally heat stable, retortable and hot fillable. However, a polycarbonate monolayer is not suitable for food and beverage packaging because the $O_2$ permeability is very high, making a barrier layer a necessity.

Crystalline polyethylene terephthalate (CPET) may be used as a monolayer since its $O_2$ permeability is low; however, it does not withstand retort conditions and is hot fillable only if heat treated first.

Polypropylene monolayer is not suitable for food and beverage packaging due to its high $O_2$ permeability, nor is it retortable or hot fillable.

Crystalline nylon is also not retortable or hot fillable.

Most of the containers which are dimensionally heat stable, hot fillable and retortable comprise complex multi-ply structures.

Multilayer polymeric containers are quite common as well for use in ovens.

For instance, containers of paperboard or plastics such as (1) amorphous nylon, (2) polypropylene, (3) polyethylene terephthalate (PET), (4) crystalline PET (CPET), and (5) polycarbonate are known, but each plastic has inherent disadvantages as a packaging container.

(1) Amorphous nylon, for example, has low gaseous and water permeabilities, which is advantageous, but a container made of amorphous nylon requires a minimum of a three (3) layer structure since the heat distortion temperature (HDT) is moderate. One or more layers of higher heat distortion material would have to be bonded with adhesive layers. A scrap regrind layer may be included. Also, the processing steps required to process amorphous nylon into a container are twofold: (a) sheet coextrusion followed by (b) forming near melting, in the case of trays. Deeper containers are made by extrusion, blow moulding or injection blow moulding. The resulting container may be subjected to hot filling (the process where the container is filled with a hot liquid and then sealed while the liquid is hot), however, the

container made of solely amorphous nylon is not suitable for use in all ovens, nor is it dimensionally heat stable after retort.

(2) Polypropylene has extremely high gaseous permeabilities, (although its water permeability is low), making it unsuitable, alone, as a shelf stable package. A polypropylene container requires a minimum of a four (4) layer structure since its gaseous permeabilities are so high and its HDT is so low. Layers of heat distortion resistance material, barrier material, adhesive and scrap regrind are required. Two processing steps are required to form polypropylene into containers such as trays, bowls, cups and tubs. Moreover, polypropylene containers are not very suited to use in conventional ovens. Solid phase pressure formed articles are generally not hot fillable. In addition, a container made of polypropylene is not dimensionally heat stable after retort, nor does polypropylene compound easily with mica.

(3) Amorphous, non-crystalline PET (polyethylene terephthalate) and PETG (glycol-modified polyethylene terephthalate) have moderate gaseous permeability and competitive water permeability, but very low HDT's owing to their lack of crystallinity. This low HDT precludes their use in retort or hot fill processes, and neither material can be used in ovens. Further, these materials are not easily compounded with mica.

Unsaturated, low molecular weight polyesters can be compounded as pastes with curing agents, then moulded and chemically crosslinked to produce thermoset trays with a high HDT. However, a two-step process is required wherein the paste is (1) press moulded and then (2) held for a prolonged heat cure interval in a hot mould, resulting in a very slow, multistep process. Contrasted with thermoplastic processing accomplished in a matter of seconds, the thermosetting process takes minutes. Moreover, the thermoset scrap cannot be reused in this process, adding further substantial cost to the moulded part and to the consumer. Finally, this approach does not lend itself to inclusion of other layers of material, thus barrier properties are rather poor for these structures.

(4) Crystalline PET (CPET) has low gaseous and water permeabilities, and may be formed into a container with only a monolayer of CPET required. However, the processing steps required are several. In order that the resulting container may be used in ovens or hot filled, a third post-forming step is crucial in order to control the degree of crystallization of the polymer to achieve an acceptable HDT and adequate impact resistance. Moreover, the maximum crystallinity allowed for CPET is about 40%. A crystallinity of greater than about 40% results in a brittle container which breaks easily. CPET is dimensionally heat stable after retort, but does not compound easily with mica. However, the retort process temperatures will cause additional crystallization to occur in CPET rendering the container rather brittle. A barrier may be used in the event that an increased shelflife or greater gas barrier is desired.

(5) Polycarbonate has high gaseous permeability, making it unsuitable, alone, as a shelf stable package. A polycarbonate container requires a minimum of a four (4) layer structure because of the high permeability and moderate HDT of polycarbonate. A two step forming process is required and the resulting container is suited for various types of ovens. However, polycarbonate also does not compound easily with mica.

Thus, there is a need for a thermoplastic polymer, from which a food or beverage container may be made which is shelf stable, impact resistant, dimensionally heat stable, may be formed in a one step process, may be used in all types of ovens, is hot fillable and retortable, and is rigid but not brittle. In addition, it is desired that the polymer compound easily with mica to impart stiffness and low gaseous permeability to the resulting container. Finally, there is a need too for a monolayer, deep-drawn (at least about a ratio of 2:1) thermoformed food and beverage container which is both hot fillable and retortable.

It has been found that all these objectives are met by using a special material belonging to the class of polyketones.

Accordingly, the invention relates to a polymer-based container suitable for use with food or beverages at high temperatures, characterized in that the polymer is a linear alternating polymer of CO and ethylene, and optionally one or more other olefinically unsaturated hydrocarbons $C_aH_b$, having the empirical formula:

$$-\!\!\left[CO-CH_2CH_2\right]_x\!\left[CO-C_aH_b\right]_y\!-$$

wherein a ≧ 3; b ≧ 6; and x/y ≧ 8.

Mica may be compounded within the linear alternating polymer as the best mode to increase stiffness.

The material used in making the container of this invention is a polyketone. Polyketones are the polymers of carbon monoxide and olefinically unsaturated hydrocarbons. They have been described in detail in a number of patents and publications. For example, polyketones are disclosed generally in Kirk Othmer Encyclopedia of Chemical Technology, 2nd Edition, Vol. 12, page 132, 1967 and in Encyclopedia of

Polymer Science and Technology, 1968, Vol. 9, 397-402. High molecular weight polymers of ethylene or ethylene and propylene which contain small quantities of carbon monoxide may be prepared with the aid of a Ziegler catalyst, as disclosed in U.S. Patent No. 4,473,482.

The polyketones especially suitable for use in this invention are those having molecular weights in the range of about 5,000 to 1,000,000. The preferred molecular weight of the polyketones is 10,000 to 50,000 or more. They contain substantially equimolar quantities of carbon monoxide and hydrocarbons. The polyketones are linear alternating polymers of carbon monoxide and ethylene and, optionally, one or more other ethylenically unsaturated hydrocarbons, such as hydrocarbons of from 3 to 20 carbon atoms inclusive, preferably from 3 to 10 carbon atoms inclusive.

Although the method by which the polymers of this description are prepared is not critical, preferably the polyketone to be polymerized according to the invention is of the class of polyketones formed by linear alternating copolymers of carbon monoxide and olefins. If the linear alternating polymer is prepared from a monomer mixture which, in addition to carbon monoxide and ethylene comprises one or more olefinically unsaturated hydrocarbons having the general formula of $C_aH_b$ terpolymers are obtained having units of the formula

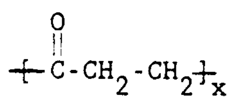

and units of the formula

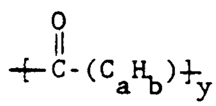

occurring randomly distributed throughout the polymer chain.

The olefinically unsaturated hydrocarbon, $C_aH_b$, includes those hydrocarbons which contain a C = C linkage.

Examples of olefinically unsaturated hydrocarbons that may be used to prepare polyketones include monoolefins, especially alphaolefins, containing from 2 to 20 carbon atoms, preferably from 2 to 10 carbon atoms, such as ethylene, propylene, butylene, isobutylene and amylene; diolefins such as butadiene and isoprene and vinyl compounds such as styrene, alphamethyl styrene. The olefinic compounds may contain functional groups, so that e.g. acrylate esters are deemed to be included in the formula $C_aH_b$. The preferred olefinically unsaturated hydrocarbon termonomer is propylene. The ratio of x:y is preferably from 8 to 400, when propylene is present.

Linear alternating polyketones suitable for use in the invention may be prepared with the aid of phosphorus, arsenic, antimony, or cyanide-containing compounds of palladium, cobalt or nickel as catalysts. Processes using such catalysts are disclosed, for example, in U.S. Patent Nos. 3,694,412; 3,689,460; 3,835,123; 3,984,388 and 4,076,911; in British Patent 1,081,304 and in European Patent Applications 121,965 and 181,014, which patents and patent applications are incorporated here by reference. Other processes to prepare linear alternating polyketones suitable for use in the invention are disclosed, for example, in the article found in the Journal of American Chemical Society, 1982, 104, 3520-2, Organometallics, 1984, 3, 866-70, and ChemTech, 1986, 1, 48-51, which articles are also incorporated here by reference.

Attractive preferred linear alternating polyketones for use in the invention are linear alternating polymers of carbon monoxide, ethylene and propylene. Their propylene content should preferably be less than about 7.0% by weight of the polyketone for a good heat distortion temperature, and preferably from about 1% to about 4% by weight of the polyketone.

The containers may be "deep drawn" which means that the height/width ratio of the container is a draw ratio of at least 2:1 and preferably from at least 2:1 to at most 3:1. The containers may be thermoformed by any one of the traditional thermoforming methods such as solid phase pressure forming or solid phase stretch forming.

The container is also hot fillable, which means that when it is filled with a hot liquid at about 100 °C (boiling temperature of water) and is then sealed while hot, the can resists any substantial distortion, deformation or buckling, even after cooling.

The container is also retortable, which means that when the container is exposed to water vapour at 135 °C for 30 minutes (standard retort conditions) the container does not substantially distort, deform or buckle. The container may be used for food or beverages such as, but not limited to, fruits, vegetables, meats, carbonated beverages and juices.

The use of the polyketone polymer as the plastic to make the package of this invention is also advantageous in that it has been found that polyketone compounds easily with untreated mica. Compatability of polyketone with both mica and several other polymers, such as nylon, polycarbonate and ethylene-vinyl alcohol copolymer (EVAL) allows the use of regrind which contains these other polymers, without the need for compatilizers or adhesives. Compounding of polyketone with mica is desirable also because it provides rigidity, stiffness and strength to the package in the form of a high modulus, which is retained in adequate measure at baking temperatures to allow unsupported baking. Thus, packages made from polyketones which have been compounded with mica are rigid enough to support food during baking and as it is being removed from cooking racks at oven temperature, even if the packages have large bottom wall dimensions. Packages of about 25 $cm^2$ or less have sufficiently small bottom wall dimensions to not need the extra stiffness imparted by the mica.

It is also important that the finished package be rigid and stiff, but not brittle, since a brittle package will break easily and exhibit undesirable cracking. Compounding a plastic material with mica also results in a savings in the cost of the material and requires less complex equipment. Of course, other fillers such as $CaCO_3$ and talc are known additives which impart stiffness to a product. However, mica is uniquely advantageous because mica is in the form of flat, long platelets of a high aspect ratio which is more efficient in stiffening and additionally blocks passage of gases. By high aspect ratio, it is meant the filler particle average length divided by the filler particle average thickness. Flat plate-like fillers such as mica are characteristically thin plates of large surface area with relatively long lengths, hence mica has a high aspect ratio of generally greater than 100. Thus the diffusion of gases is slowed since the gas molecules must travel the length of each long mica platelet in working their way through the mica much as in a maze. Further, this high aspect ratio results in efficient stiffening of the polymer at a relatively lower concentration than would normally be necessary with other fillers.

Other polymers used in packaging do not compound easily, if at all, with mica. In order to "couple" with conventional polymers, mica must undergo a silane treatment whereby a silane group $(CH_3O)_3Si(CH_2)_zR$, (wherein z = 1-25 and R = a group compatible or reactive with the resin in question, for example, a urethane group or a polyester) with pendant compatible groups is coated onto the mica surface to improve the bondability of the polymer to mica. Even then, most polymers blended with mica exhibit "stress whitening" or pearlescent effects if a sheet of the mica-blended polymer is solid phase pressure formed or thermoformed. The "stress whitening" pearlescent effect is due to the voiding (holes) created through poor bonding to these matrix plastics and results in a lower barrier performance of the plastic sheet.

The size of the particles of mica which are useful in the compositions can vary but particles from 0.038 mm (400 mesh) to 0.150 mm (100 mesh) are preferred.

The amount of mica to be incorporated into the compositions of the invention usually is a minor amount relative to the polymer which is present as the major component in the total blend. Amounts of mica from about 5% by weight to about 45% by weight, based on the total composition, are satisfactory with amounts from 10% by weight to 35% by weight, based on the total composition, being preferred.

Bilayer extruded structures of layers of a lower melting and a higher melting point polyketone resin may be used to improve the heat sealability of one surface of the package/container. This construction has the advantage over conventional multilayer coextrusion in that bonding of the polyketone layers is outstanding without the use of an adhesive layer. Moreover, use of the regrind is easy since polyketone plastics of different melting temperatures are readily compatible in the melt and adhere well and may be used directly in the base layer or surface layer material without the neccessity of a scrap regrind layer. Other multilayer structures are severely disadvantaged on this point as the various multilayers are generally incompatible with one another and must be scraped, or reground, and included as a separate and distinct additional coextruded layer in the multilayer structure. Because of the incompatibility of these materials, this layer contributes little to permeability resistance, and generally results in the manifestation of the worse properties of the combined, yet incompatible materials. Typically no such deficiency is found for polyketone-blended materials.

Most importantly, however, a monolayer (one layer) polyketone container may be successfully made. This construction is preferred and the best mode. Many other polymers cannot be made into monolayer containers due to low HDT's and high gas and/or water permeabilities. They require a heat distortion resistance material, an adhesive, a scrap regrind layer and sometimes an $O_2$ barrier resistance material. A monolayer container is advantageous since it saves time and cost in forming the container, combines all the

desirable functional properties in one material and allows simple utilization of scrap/regrind.

Transparency of the polyketone may be increased by imposing orientation during fabrication. This may be done by stretching polyketone sheet at or just below melting as is common practice in solid phase pressure forming. A nominal 4x thickness reduction, such as accomplished in a 2x by 2x draw, is adequate for achievement of good clarity. The draw may exceed this level but only slightly better clarity is achieved. The draw does not have to be balanced.

Polyketone may be thin wall injection moulded very quickly and in one step. Thin wall injection moulding is very useful for making "deluxe" type, precision containers which have high aesthetic appeal. Crystalline polyethylene terephthalate (CPET) cannot easily be thin wall injection moulded because its crystallinity must be controlled to be no more than about 40%, else brittle containers result. Further, crystallinity must be developed and controlled so that at least 30% is achieved so that these containers have heat distortion resistance. Crystallization of polyketone occurs rapidly and unlike CPET there is no maximum percent crystallinity in the polyketone that must be achieved or controlled to produce specific property balances. This important advantage eliminates any need for post forming heat treatment or annealing at elevated temperatures as practised for CPET. For best possible oxygen barrier performance, it is advantageous to use a mould heated to over 82 °C and a high packing force during moulding. This results in higher levels of crystallinity and optimum barrier performance but does not unduly prolong the moulding cycle.

The container formed preferably comprises a tray, cup, bowl or tub, and most preferably a tray, which includes a thin wall bottom wall and a peripheral structure, where the peripheral structure includes a thin wall peripheral wall extending upwardly from the thin wall bottom wall and a rim extending outwardly from the thin wall peripheral wall at the top. By "thin wall" it is meant a wall thickness of no more than 1.25 mm. Preferably, these walls are from 0.125 to 1.125 mm thick and most preferably from 0.250 to 0.875 mm thick. The thin walls may be easily accomplished by the use of a thin wall injection moulding technique or thermoforming methods, including melt forming, melt blowing, and solid phase pressure forming. A thin wall package may be desired. By "thin wall package" it is meant that at least the bottom wall and optionally the peripheral wall extending upward from the bottom wall have thin walls.

One may wish to incorporate non-absorbing fillers such as glass spheres, when making parts with thickness above about 1.25 mm in order for the polyketone sheet to be useable in microwave ovens for lengthy periods.

The container is shelf stable which means the package and its contents remain substantially the same without any undesirable changes due mostly to $O_2$ diffusion into the container over time during storage on shelves. The basic shelf stability of a food container or tray is governed by a variety of elements:

1) The sensitivity of the particular food product to oxidation by oxygen permeating the food container or tray and the permeation of oxygen through the food within the package;
2) The ability of the package material to prevent oxygen permeating through itself;
3) The surface area of the package presented to the oxygen environment outside the package;
4) The average wall thickness of the package material;
5) The weight of the packaged food product; and
6) Inner gas overpressure remaining in the container.

The container is also dimensionally heat stable, in that it can withstand typical oven temperatures of up to about 230 °C.

Example 1

Using standard procedures, melt extruded sheet of polyketone copolymer (y = 0) and terpolymer (a = 3, b = 6) resins and moulded plaques of various compounds were solid phase pressure formed by conventional methods into tapered 60 ml cups and 30 ml trays. Mica was compounded in the polyketone resin at 15% by weight and EVAL was added for barrier enhancement at 20% by weight. No stress whitening or pearlescence is experienced with the polyketone. The moulded plaques and formed parts all exhibited a noticeable increase in modulus (stiffness, rigidity) without significant embrittlement.

Example 2

Polyketone copolymer and terpolymer sheets were formed as described in Example 1, and thin (0.71 mm) gauged trays and tapered cups were formed by solid phase pressure forming. The trays and cups were subjected to the "bacon fry" test where bacon is browned in a microwave oven while directly contacted with the polyketone tray. The trays and cups exhibited no cracking or melting.

Example 3

Polyketone copolymer and terpolymer tapered cups were formed as in Experiment 1 and the volume of each cup (volume 1 and volume 2 respectively) was measured before and after exposure to 135 °C for 30 minutes and the percent difference of volume 1 and volume 2 was used as the performance indicator. Two polypropylene cup sizes were produced: 165 and 115 ml, while only the 115 ml size polyketone terpolymer cup was fabricated. As may be seen in Tables 1-3 below, the average shrinkage for the 115 ml polypropylene cups was about 8.6% while the average % shrinkage of the 115 ml polyketone cups was about 1.6%. Thus, the polyketone cups showed superior dimensional heat stability and thermal shrinkage behaviour at standard retort temperatures superior to that of propylene cups.

Example 4

Cups and trays were formed of polyketone copolymer and terpolymer materials as described in Experiment 1. The cups and trays were subjected to conventional oven tests of 30 minutes at 215 °C. Shape and volume retention for cups and trays were measured. Shape and volume retention for the polyketone cups and trays were more than adequate. All cups and trays substantially retained their shapes without any distortion, buckling, cracking, melting, etc. The volumes of each of the cups and trays were measured before and after exposure to the 215 °C oven and compared. The volumes were substantially the same.

Table 1

PP Cup Shrinkage

Material: Polypropylene Extruded Sheet 165 ml Cup

0.123 mm

Oven sheet heating time 56.0 secs Top 274 °C

Bottom 288 °C

| CUP SHEET # | VOL 1 (ml) | VOL 2 (ml) | % CHANGE |
|---|---|---|---|
| 1 | 164 | 147 | 10.4 |
| 2 | 164 | 140 | 14.6 |
| 3 | 164 | 140 | 14.6 |
| 4 | 165 | 145 | 12.1 |
| 5 | 164 | 145 | 11.6 |
| 6 | 165 | 145 | 12.1 |
| 7 | 166 | 146 | 12.0 |
| 8 | 165 | 146 | 11.5 |
| 9 | 165 | 147 | 10.9 |
| 10 | 165 | 146 | 11.5 |
| MEAN | 164.7 | 144.7 | 12.14 |
| STD DEV | 0.64 | 2.45 | 1.35 |

Table 2

PP Cup Shrinkage

Material: Polypropylene Compression Moulded Sheet 115 ml Cup

0.124 mm

Oven sheet heating time 56.0 secs

Top 274 °C

Bottom 288 °C

| CUP # | VOL 1 (ml) | VOL 2 (ml) | % CHANGE |
|---|---|---|---|
| 1 | 114 | 97 | 14.9 |
| 2 | 114 | 100 | 12.3 |
| 3 | 115 | 106 | 7.83 |
| 4 | 115 | 107 | 6.96 |
| 5 | 115 | 106 | 7.83 |
| 6 | 113 | 107 | 5.31 |
| 7 | 115 | 105 | 8.70 |
| 8 | 115 | 106 | 7.83 |
| 9 | 114 | 107 | 6.14 |
| 10 | 115 | 106 | 7.83 |
| MEAN | 114.5 | 104.7 | 8.56 |
| STD DEV | 0.67 | 3.23 | 2.75 |

Table 3

PK Cup Shrinkage

Material: Polyketone Terpolymer 0.218 mm    115 ml cup

| CUP | PREHEAT (MIN/°C) | OVEN (MIN/TOP/BOTTOM/°C) |
|---|---|---|
| A) | 6/190 | 3/282/282 |
| B) | 8/196 | 3/274/274 |
| C) | 10/190 | 3/254/274 |
| D) | 11/190 | 3/252/279 |

| CUP | VOL 1 (ml) | VOL 2 (ml) | % CHANGE |
|---|---|---|---|
| A | 119 | 118 | 0.84 |
| B | 115.5 | 113 | 2.16 |
| C | 114 | 112 | 1.75 |
| D | 113 | 111 | 1.77 |
| MEAN | 115.38 | 113.5 | 1.63 |
| STD DEV | 2.27 | 2.69 | 0.48 |

Table 4

COMPARISON OF PROPERTIES OF PK VS. OTHER PACKAGING PLASTICS

| | Amorphous Nylon | Crystalline Nylon | Poly propylene | Amorphous PET or PETG |
|---|---|---|---|---|
| Permeability: $\mu l.mm/dm^2.day.$ bar $O_2$ : | ~4-19 | | 1170 | 31-97 |
| $CO_2$: | 39 | - | 3100 | 78-295 |
| $mg.mm/dm^2.day$ at 90% rel. hum., 38°C $H_2O$: | 59-79 | 98 | 2.08 | 20-28 |
| Modulus at 149°C (ksi) | high | (380) | low (200) | distorts |
| Low temp. Impact at 4°C | good | | low | good |
| Min. wall thickness for adequate $O_2$ barrier, mm | 0.25-0.50 | | needs barrier | 0.50-2.50 |
| Dual Oven Forming Cycle | not possible | | not possible | not possible |
| Compounded easily with mica | requires silane treatment | | requires silane treatment | requires silane treatment |
| Heat treatment required? | - | N | N | - |

Table 4 (cont'd)

| | Crystalline PET | Polycarbonate | Ethylene-Propylene Polyketone | Ethylene Polyketone |
|---|---|---|---|---|
| Permeability: $\mu$l.mm/dm$^2$.day. bar $O_2$: | 8.9-19 | 777-970 | 8-19 | 8-19 |
| $CO_2$: | ~39-58 | > 1170 | 93 | 93 |
| mg.mm/dm$^2$.day at 90% rel. hum., 38°C $H_2O$: | 4.7-7.9 | 12-39 | 12-47 | 47-67 |
| Modulus at 149°C (ksi) | adequate unfilled (500) | adequate unfilled (350) | adequate unfilled (250-400) | adequate unfilled (460) |
| Low temp. Impact at 4°C | adequate | good | adequate | adequate |
| Min. wall thickness for adequate $O_2$ barrier, mm. | 0.25-0.50 | needs barrier | 0.25-0.50 | 0.25-0.50 |
| Dual Oven Forming Cycle | slow & high tool cost | fast | fast | fast |
| Compounded easily with mica | requires silane treatment | not possible | easily | easily |
| Heat treatment required? | Y | N | N | N |

Table 4 (cont'd)

| | Amorphous Nylon | Crystalline Nylon | Poly propylene | Amorphous PET or PETG |
|---|---|---|---|---|
| Suitability of monolayer? | N | N | N | N |
| Hot fillable at 100°C? | N | N | N | N |
| Retortable at 135°C? | fail | fail | fail | fail |
| Thin wall injection moulding? | fair | - | good | poor |
| Melt viscosity | low | - | high | medium |
| Melt strength | low | - | medium | medium |
| Extrudability | poor | - | good | medium |
| Crystallization rate | amorphous | - | high | amorphous |
| Moulding Cycle time | medium | medium | fast | slow |
| Blow Moulding | poor | - | good | fair |
| Heat Distortion Temperature achievable, °C (ASTM D648, 1-82 MPa) | 120 | - | 57 (homopolymer) | 63 |

Table 4 (cont'd)

| | Crystalline PET | Polycarbonate | Ethylene-Propylene Polyketone | Ethylene Polyketone |
|---|---|---|---|---|
| Suitability of monolayer? | Y | N | Y | Y |
| Hot fillable at 100°C? | Y (if heat-treated) | Y | Y | Y |
| Retortable at 135°C? | fail (unless heat-treated) | pass | pass | pass |
| Thin wall injection moulding? | not possible | not recommended | good | good |
| Melt viscosity | low-medium | medium-high | high | high |
| Melt strength | medium | low-medium | high | high |
| Extrudability | good | medium | very good | very good |
| Crystallization rate | low | amorphous | high | high |
| Moulding Cycle time | very slow | medium | very fast | very fast |
| Blow Moulding | poor | good | good | good |
| Heat Distortion Temperature achievable, °C (ASTM D648, 1-82 MPa) | 85 | 127 | 85-200 ($C_3$ up to about 7% by weight) | 205 |

Table 4 compares various characteristics and properties of six of the thermoplastics most commonly used in food and beverage packages: (1) amorphous nylon, (2) crystalline nylon, (3) polypropylene, (4) amorphous polyethylene terephthalate (PET and PETG), (5) crystalline polyethylene terephthalate (CPET), (6) polycarbonate, with polyketones based on ethylene per se or ethylene plus propylene.

The data in Table 4 support the conclusion that:

(1) Permeability is divided into three types: (1) $O_2$, (2) $CO_2$, and (3) $H_2O$. An $O_2$ and $CO_2$ permeability of less than about 0.8 ml.mm/dm$^2$.day.bar and a $H_2O$ permeability of less than about 120 mg.mm/dm$^2$.day at 90% relative humidity and 38 °C are considered acceptable for food and beverage packaging. The higher the permeability the thicker the layer or layers of polymeric material or the greater number of layers of polymeric material that will be needed.

(2) Modulus measured at 149 °C is adequate, unfilled with mica, for amorphous nylon, CPET, polycarbonate and polyketone.

(3) Low Temperature Impact tests were run at 4 °C. Polyketone displayed adequate low temperature impact resistance.

(4) The minimum polyketone wall thickness needed for adequate $O_2$ barrier is 0.25-0.50 mm, which is competitive with or better than that of the other six thermoplastics.

(5) Melt viscosity of polyketones is high, as is melt strength. Extrudability of polyketone is very good and the polyketone rate of crystallization is high.

(6) Moulding cycle time is very fast and blow moulding techniques work well with polyketone.

(7) Most importantly, polyketone compounds easily with mica without the need for the time consuming treatment process where a silane group is added to the polyketone in order to make compoundability with mica easily.

(8) Polyketone may be made into a container using only a single layer (monolayer) of polyketone material, without the need for an adhesive layer, barrier material, or scrap regrind material.

It may be formed into a thin walled container by injection moulding in only one step or may be extruded and thermoformed in two steps and does not require any post forming treatment. The container which results can be used in all ovens, is hot fillable and retortable. In addition, polyketone has no upper limit of percent crystallinity requiring control in order to achieve specific property balances.

## Claims

1. Polymer-based container suitable for use with food or beverages at high temperatures, characterized in that the polymer is a linear alternating polymer of CO and ethylene, and optionally one or more other olefinically unsaturated hydrocarbons $C_aH_b$, having the empirical formula:

$$-[CO-CH_2CH_2]_x-[CO-C_aH_b]_y-$$

wherein a ≧ 3; b ≧ 6; and x/y ≧ 8.

2. A container as claimed in claim 1, characterized in that a = 3, b = 6 and 8 ≦ x/y ≦ 400.

3. A container as claimed in claim 1, characterized in that x = 1 and y = 0.

4. A container as claimed in any one of claims 1-3, characterized in that it comprises a tray including a thin bottom wall and a peripheral structure, where the peripheral structure includes a thin peripheral wall extending upwardly from said bottom wall and a rim extending outwardly from said peripheral wall at the top of said peripheral wall, and where said bottom wall and said peripheral structure are made of said linear alternating polymer.

5. A container as claimed in claim 4, characterized in comprising a monolayer of said linear alternating polymer.

6. A container as claimed in claim 5, characterized in being a monolayer thermoformed food and beverage container, with a height/width ratio of draw of at least about 2:1, where said container is made of a linear alternating polymer of carbon monoxide and ethylene, and, optionally, of carbon monoxide and propylene, wherein said propylene content is below about 7%.

7. A container as claimed in any one of claims 1-6, characterized in that said container contains a minor proportion, relative to said linear alternating polymer of mica compounded within said linear alternating polymer.

8. A container as claimed in claim 4, characterized in that the area of said bottom wall is at least 25 cm$^2$.

**9.** A container as claimed in claim 4, characterized in that said bottom wall and said peripheral wall are each from 0.025 to 1.25 mm thick.

**10.** A container as claimed in any one of claims 1-9, characterized in that the polymer has a molecular weight in the range of 5,000 to 1,000,000.

**Patentansprüche**

**1.** Behälter auf Basis von Polymeren, der zum Gebrauch für Lebensmittel und Getränke bei hohen Temperaturen geeignet ist, **dadurch gekennzeichnet**, daß das Polymer ein lineares, alternierendes Polymer von CO und Ethylen und gegebenenfalls eines oder mehrerer anderer olefinisch ungesättigter Kohlenwasserstoffe $C_aH_b$ mit der empirischen Formel

$$-[CO-CH_2CH_2]_x[CO-C_aH_b]_y- \quad (I)$$

ist, in der a ≧ 3; b ≧ 6 und x/y ≧ 8 ist.

**2.** Ein Behälter wie in Anspruch 1 beansprucht, dadurch gekennzeichnet, daß a = 3, b = 6 und 8 ≦ x/y ≦ 400 sind.

**3.** Ein Behälter wie in Anspruch 1 beansprucht, dadurch gekennzeichnet, daß x = 1 und y = 0 sind.

**4.** Ein Behälter wie in irgendeinem der Ansprüche 1-3 beansprucht, dadurch gekennzeichnet, daß er eine flache Schale, einschließend eine dünne Bodenwand und eine Umfangsstruktur, umfaßt, wobei die Umfangsstruktur eine dünne, sich aufwärts von der besagten Bodenwand erstreckende Umfangswand und einen sich auswärts von der besagten Umfangswand am oberen Ende der besagten Umfangswand erstreckenden Rand einschließt und wobei besagte Bodenwand und besagte Umfangsstruktur aus besagtem linearen alternierenden Polymer hergestellt sind.

**5.** Ein Behälter wie in Anspruch 4 beansprucht, dadurch gekennzeichnet, daß er eine Einzelschicht des besagten linearen alternierenden Polymers umfaßt.

**6.** Ein Behälter wie in Anspruch 5 beansprucht, dadurch gekennzeichnet, daß er ein einzelschichtiger warmgeformter Nahrungsmittel- und Getränkebehälter mit einem Höhen/Breitenreckverhältnis von mindestens etwa 2:1 ist, wobei besagter Behälter aus einem linearen alternierenden Polymer von Kohlenmonoxid und Ethylen und gegebenenfalls Kohlenmonoxid und Propylen hergestellt ist, wobei besagter Propylengehalt unter etwa 7 % liegt.

**7.** Ein Behälter wie in irgendeinem der Ansprüche 1-6 beansprucht, dadurch gekennzeichnet, daß besagter Behälter einen geringeren Anteil - bezogen auf das lineare alternierende Polymer - an Glimmer enthält, der mit besagtem linearen alternierenden Polymer kompoundiert ist.

**8.** Ein Behälter wie in Anspruch 4 beansprucht, dadurch gekennzeichnet, daß der Bereich der besagten Bodenwand mindestens 25 $cm^2$ ist.

**9.** Ein Behälter wie in Anspruch 4 beansprucht, dadurch gekennzeichnet, daß die besagte Bodenwand und die besagte Umfangswand jeweils 0,025 bis 1,25 mm dick sind.

**10.** Ein Behälter wie in irgendeinem der Ansprüche 1-9 beansprucht, dadurch gekennzeichnet, daß das Polymer ein Molekulargewicht im Bereich von 5000 bis 1 000 000 hat.

**Revendications**

**1.** Conteneur à base de polymères destiné à être utilisé avec des aliments et des boissons à des températures élevées, caractérisé en ce que le polymère est un polymère alterné linéaire formé de CO

et d'éthylène, et de façon optionnelle d'un ou plusieurs hydrocarbures $C_aH_b$ insaturés de façon oléfinique, ayant la formule empirique :

$$\left[ CO\text{-}CH_2CH_2 \right]_x \left[ CO\text{-}C_aH_b \right]_y$$

où a≧3 ; b≧6 ; et x/y≧8.

2. Un conteneur selon la revendication 1, caractérisé en ce que a = 3, b = 6 et 8≦x/y≦400.

3. Un conteneur selon la revendication 1, caractérisé en ce que x = 1 et y = 0.

4. Un conteneur selon l'une des revendications 1 à 3, caractérisé en ce qu'il comprend un plateau comprenant une paroi de fond mince et une structure périphérique, dans laquelle la structure périphérique comprend une paroi périphérique mince qui s'étend vers le haut à partir de ladite paroi de fond et un rebord qui s'étend vers l'extérieur à partir de ladite paroi périphérique au niveau du haut de ladite paroi périphérique, et dans laquelle ladite paroi de fond et ladite structure périphérique sont fabriquées avec ledit polymère alterné linéaire.

5. Un conteneur selon la revendication 5, caractérisé en ce qu'il comprend une monocouche dudit polymère alterné linéaire.

6. Un conteneur selon la revendication 5, caractérisé en ce qu'il est un conteneur monocouche thermoformé pour aliments et boissons, avec un rapport hauteur/largeur d'étirement d'au moins environ 2 pour 1, dans lequel ledit récipient est fabriqué en polymère alterné linéaire de monoxyde de carbone et d'éthylène, et optionnellement de monoxyde de carbone et de propylène, dans lequel ladite teneur en propylène est inférieure à environ 7%.

7. Un conteneur selon l'une des revendications 1 à 6, caractérisé en ce que ledit conteneur contient une quantité mineur, par rapport audit polymère alterné linéaire, de composé mica à l'intérieur dudit polymère alterné linéaire.

8. Un conteneur selon la revendication 4, caractérisé en ce que la surface de ladite paroi de fond est d'au moins 25 $cm^2$.

9. Un conteneur selon la revendication 4, caractérisé en ce que ladite paroi de fond et ladite paroi périphérique ont chacune une épaisseur allant de 0,025 à 1,25 mm.

10. Un conteneur selon l'une des revendications 1 à 9, caractérisé en ce que le polymère a une masse moléculaire moyenne dans la gamme allant de 5000 à 1.000.000.